# EUROPEAN PATENT APPLICATION

(11) **EP 3 964 517 A1**
(43) Date of publication of application: **09.03.2022**
(21) Application number: 20764930.2
(22) Date of filing: 21.02.2020
(51) Int. Cl.: C07F 9/30

(54) **DIALKYLPHOSPHINIC ACID-ALKYLPHOSPHITE METAL COMPOSITE SALT, AND PREPARATION METHOD THEREFOR AND USE THEREOF**

(30) Priority: 07.03.2019 CN 201910200946
(71) Applicant: Li, Jie, Hainan 570203 (CN)
(72) Inventor: LI, Shaohua, Haikou, Hainan 570203 (CN)
(74) Representative: Bandpay & Greuter
(86) International application number: PCT/CN2020/076237
(87) International publication number: WO 2020/177559

(57) **Abstract**

The invention relates to a dialkylphosphinic-alkylphosphite metal double salt or its mixture of formula (1). The invention also relates to the use of dialkylphosphinic-alkylphosphite metal double salt as flame retardant for molding compound compositions, and polymer molding composition containing combination of flame retardant and flame retardant synergist that comprising the dialkylphosphinic-alkylphosphite metal double salt.

## Description

### Field of the Invention

This invention relates to a dialkylphosphinic-alkylphosphite metal double salt or its mixture, and a process for its preparation and use thereof. Particularly this invention relates to a dialkylphosphinic-alkylphosphite metal double salt as halogen free flame retardant or flame retardant synergist, and a process for its preparation and use.

### Technical Background

Most polymeric materials comprising resins such as polyolefins, polyester, polycarbonate, polyamide, polyurethane, epoxy resin and acrylic polymers, and any other thermoplastic or thermoset polymeric resins, elastomers, coatings, and fibers, are highly flammable. For the purpose of safety, in many cases, products made of these materials need to meet certain flame retardant standards. In order to meet these flame retardant standards, a certain proportion of flame retardants, such as those composed of bromine-containing compounds and phosphorus-containing compounds, can usually be added to the formulations of these materials. Because of its high efficiency and low smoke density when on fire, phosphorus containing flame retardants are very attractive and become the fastest growing flame retardants in recent years. Most phosphorus-containing compounds, such as phosphate flame retardants, have limited application in plastics, especially engineering plastics because of their low decomposition temperature, mobility and high volatility in materials. One of the high-temperature resistant flame retardants suitable for engineering plastics is dialkyl phosphinate. DE19752735 discloses a process for the preparation of dialkylphosphinic metal salts. CN103951699B describes a process that improves the reaction efficiency for the preparation of aluminum diethylphosphinate. DE2447727 discloses a process for the preparation of dialkylphosphinic metal salt and its use. According to the current technology, aluminum dialkylphosphinate and zinc dialkylphosphinate as flame retardants have been recognized by the market and commercialized. Especially aluminum diethylphosphinate, as an environmentally friendly halogen-free flame retardant, has been widely used in the fields of plastics, leather, electronic circuit boards and so on. However, aluminum diethylphosphinate alone is generally inefficient. Therefore, Patent US6365071B1 discloses a flame retardant mixture comprising dialkylphosphinic aluminum salt and melamine cyanurate that could improve its flame retardancy. Patent 6255471B1 discloses a flame retardant composition comprising dialkylphosphinic aluminum salt and melamine polyphosphate that greatly improves the efficiency of the flame retardant system and reduces the cost of materials. However, these compounding systems often lead to polymer degradation during high-temperature processing, which leads to the deterioration of mechanical properties of materials. At the same time, because of their own characteristics, they often cause certain degree of corrosion to production equipment. Application US20070029532A1 described the effects and methods to solve these issues. Patent US6547992B1 discloses a flame retardant mixture comprising zinc borate as a stabilizer to reduce the degradation of polymer during process. The specially treated aluminum phosphite is also considered as one of the effective synergists without nitrogen. Patent application US20140336325A1 describes a composition comprising high temperature resistant phosphite aluminum as a synergist. The above synergist compounding technology alleviates the processing or material problems to a certain extent, but these synergists are all used by physical mixing, and the addition amount is high, so the flame retardant efficiency often fails to meet the requirements.

In the invention, it was surprised to find that when the dialkylphosphinic-alkylphosphite metal double salts of the invention is used as a flame retardant or a flame retardant synergist, it can reduce the damage to material performance and the corrosion to equipment. Different from the current technology, the dialkylphosphinic-alkylphosphite metal double salts of the present invention has corresponding components which are bonded with each other in a certain molar ratio in the body. The mixture of these dialkylphosphinic-alkylphosphite metal double salts are different from the physical mixture, because the components of dialkylphosphinic-alkylphosphite metal double salts are not added by mixing, but remain in the product by the reaction mixture of the preparation method. The inventor has found through research that such dialkylphosphinic compound metal salt or dialkylphosphinic - alkylphosphite metal double salts have higher flame retardant efficiency in PBT, nylon 66, nylon 6T/66 and other glass fiber reinforced materials, and the flame retardant molding material prepared by dialkylphosphinic -alkylphosphite metal double salts greatly reduce the decomposition of polymer molecules during processing, and also significantly improves the corrosion of equipment during processing.

### Content of the invention

The objective of the invention is to provide a dialkylphosphinic-alkylphosphite metal double salts and/or its mixture as halogen free flame retardant or as flame retardant synergist, in flame retardant composition for thermoplastic or thermoset polymeric molding compound, polymeric moldings, polymeric coatings, polymeric films and fabrics, and polymeric synthetic leather composition comprising the invented flame retardants with improved mechanical performance and reduced corrosion to process equipment.

Another objective of the invention is to provide a process for the preparation of dialkylphosphinic-alkylphosphite metal comlex double salt.

Yet another objective of the invention is to provide a halogen free flame retardant polymer composition comprising dialkylphosphinic-alkylphosphite metal double salt and polymer resins for making flame retardant polymer articles.

Surprisingly it is found that when used in flame retardant thermoplastic polymer composition, the inventive dialkylphosphinic-alkylphosphite metal double salt provides excellent flame retardancy, good mechanical performance of polymer resins, and less corrosion to process equipment compared to dialkylphosphinic meal salt. The inventive dialkylphosphinic-alkylphosphite metal salt can be used along or in combination with other flame retardant synergists. Usually the flame retardant containing the inventive dialkylphosphinic-alkylphosphite metal double salt is mixed with polymer resin along with other additives through a extruder. The polymeric composition containing dialkylphosphinic-alkylphosphite metal double salt flame can be further injected to form flame retardant articles. The extrusion and injection are usually carried out at high temperature of the molten state of polymer resin, which can be as high as over 320°C instantly. Obviously the synergists used should be able to withstand such a temperature without degradation. Surprisingly it is found that the inventive dialkylphosphinic-alkylphosphite metal double salt are more thermal stable and has better flame retardance compared to mixtures of the respective salts.

When the metal double salt of diethylphosphinic-alkylphosphinic contains a small amount of alkylphosphorous components, the double salt as a plastic flame retardant or a flame retardant synergist has higher flame retardant efficiency than the corresponding simple diethylphosphinic salt, and reduces the degradation of polymer and corrosion to processing equipment.

Therefore, the dialkylphosphinic-alkylphosphite metal double salt of the present invention overcomes the shortcomings of the current technology, and its chemical formula is:

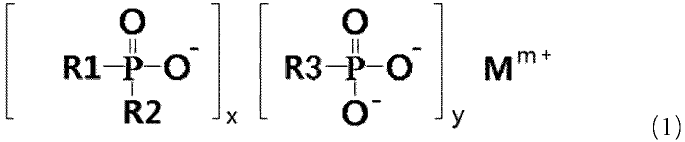

Wherein R1, R2, R3 identical or different, are H, linear or branched C1-C8 alkyl, or linear or branched C2-C12 alkylene, or C6-C18 aryl, or organic ligands c containing carboxyl, hydroxyl, amine, ester, amide, epoxy, or halogen groups.

Wherein M is Ca, Mg, Sb, Sn, Ge, Ti, Zn, Fe, Zr, Ce, Al, Sr, Mn metal ion and/or protonated nitrogen base.
wherein
   m is ionic valence number of the metal cation
   x is any number from 0 to (m-0.01)
   y is any number from 0.0005 to (m/2).
Wherein the ionic valence number of metal cation equals the total ionic valence number of dialkylphosphinic-phosphite.
Preferably,
   x is any number from 1 to (m-0.01)
   y is any number from 0.005 to (m-1)/2
Particularly preferably,
   x is any number from 1.6 to (m-0.01)
   Y is any number from 0.005 to (m/2-0.8)

Preferably, the particle size of dialkylphosphinic-alkylphosphite metal double salts is from 0.1 to 1000 µm, water solubility from 0.01 to 10 g/l, packing density from 80 - 800 g/l, and moisture content from 0.1 to 5%.

The purpose of the present invention is also achieved by providing a method for preparing dialkylphosphinic-alkylphosphite metal double salts, which comprises the following steps:
Reacting the mixture of dialkylphosphinic or its alkali metal salt and alkylphosphorus or its alkali metal salt in aqueous solution with metal compound in aqueous media to form the dialkylphosphinic-alkylphosphite metal double salt. The metal compounds preferably include Mg, Ca, Zn, Al, Ti, Fe, Sn, Zr, and the aqueous media preferably comprising 50 - 100% of water and 0 - 50% of additives. Preferably the aqueous media comprises 80-100% of water and 0-20% of additives. The additive is preferably inorganic acid, acid salt, carbonic acid, alkali and electrolyte.

Preferably, the aqueous media comprises 95-100% of water, 0-5% of additives. Preferably, the dialkylphosphinic alkali salt is sodium salt.

Preferably, the ratio of the sum of equivalent number of dialkylphosphinic and alkylphosphite to metal compound is form 1.5 : 1 to 1 : 2. Preferably, the ratio of the sum of equivalent number of dialkylphosphinic and alkylphosphite to metal compound is form 1.2 : 1 to 1 : 1.2,
Preferably, the metal compound is metal of compound of Mg, Ca, Zn, Al, Ti, Sn, Zr.

The dialkylphosphinic-alkylphosphite metal double salt mentioned above is preferably diethylphosphinic-ethylphosphite aluminum double salt, diethylphosphinic-ethylphosphite zinc double salt, diethylphosphinic-ethylphosphite magnesium double salt, diethylphosphinic-ethylphosphite calcium double salt, diethylphosphinic-phosphite aluminum double salt, diethylphosphinic-phosphite magnesium double salt, diethylphosphinic-phosphite zinc double salt, diethylphosphinic-phosphite calcium double salt, diethylphosphinic-phosphite titanium double salt.

The dialkylphosphinic /alky phosphite ratio of the dialkylphosphinic-alkylphosphite metal double salt of the invention can be prepared by chemical synthesis as required.

The dialkylphosphinic-alkylphosphite metal double salt of the invention is used as a flame retardant and a flame retardant synergist, and is mainly used for flame retardant of engineering plastics, particularly for PBT, polyamide PA6, PA66, PA6T/66 and so on. With the compound composition of dialkylphosphinic -alkylphosphite metal double salt and polymer engineering plastics, the corresponding flame retardant engineering plastic products can be obtained through heating extrusion/injection molding.

The invention also provides the application of the molding composition of engineering plastics containing dialkylphosphinic-alkylphosphite metal double salt as flame retardant and flame retardant synergist in flame retardant thermoplastic engineering plastics.

The polymeric molding composition preferably consists of
A from 55 to 99.9 % by weight of polymeric resin, preferably from 60 to 95 % by weight of polymeric resin,
B from 0 to 55% by weight of filler and reinforcing fiber, preferably from 1 to 50% by weight of filler and reinforcing fiber,
C from 0.1 to 45 % by weight of flame retardant combination, preferably from 1 to 35% by weight of flame retardant composition,
D optionally from 0 to 30 % by weight of additives, preferably 1to 20% by weight of additives,
wherein the sum of weight percentages of each component from A to D adds to 100 percent.

Preferably the flame retardant combination consists of dialkylphosphinic-alkylphosphite metal double salt and optionally one flame retardant synergist. Preferably the flame retardant synergist are condensation products of melamine and/or reaction products of melamine with phosphoric acid and/or reaction products of melamine with polyphosphoric acid or its mixture and/or condensation product of melamine and cyanurate, and condensation product of aliphatic alcohols, phenols, resorcinols and phosphoric acid, chemicals containing nitrogen and phosphorus as (NH4)yH3-yPO4 or (NH4PO3)z, wherein y = 1 -3, and z = 1 -10,000, benzoguanamine, Tri (hydroxyethyl) isocyanurate, glucoluruil, melamine, melamine cyanurate, dicyandiamide, guanidine, magnesium oxide, calcium oxide, aluminum oxide, manganese oxide, tin oxide, aluminum hydroxide, Boehmite, dihydrotalcite, hydrocalumite, magnesium hydroxide, calcium hydroxide, zinc hydroxide, tinoxide hydrate manganese hydroxide, zinc borate, zinc stannate, zinc metalilicate.

Optionally the flame retardant combination can consist of at least one flame retardant and dialkylphosphinic-alkylphosphite metal double salt as synergist. The flame retardant preferably includes melam, melem, melon, dimelamine pyrophosphate, melamine polyphosphate, melem polyphosphate, melon polyphosphate/or melem polyphosphate or their mixtures, and/or ammonia carbonate, ammonia dihydrgen phosphate and/or ammonia phosphate, phosphate, phosphinic aluminum salt, phosphinic zinc salt, phosphinic calcium salt, sodium phosphite, phenylphosphinic acid and its salt, dialkylphosphinic acids and their salts, monoalkylphosphinic acids and their salts, 2-carboxylethylphosphinic acid and its salt, 2-carboxylethylphenylphosphinic acid and its salt,2-carboxylethylarylphosphinic acids and their salts, oxygen-10-Phosphorus Heterophenanthren (DOPO) and its salt, benzoquinone adducts, itaconic acid and its salts.

### DETAILED DESCRIPTION OF SOME EMBODIMENTS

The preparation method and application of the dialkylphosphinic -alkylphosphite metal double salt of the present invention can be further illustrated by the following examples. However, the scope of rights of the present invention is not limited to the listed cases.

### Example 1: preparation of diethylphosphinic sodium salt

To a 16 litre glass lined pressure reactor was charged 1490 g (14mol) of sodium hypophosphite monohydrate, 35 g of sulfuric acid and 7.5 kg of water. The temperature of the solution was raised to 100 °C and ethylene was introduced into the reactor via pressure reduced valve and equilibrated at 6 bar. With continuous agitation, temperature of the solution was kept at 100-110 °C and ethylene pressure was kept at 6 bar, 16 g (0.5 mol) of potassium persulfate in 300 g of water was charged into the reactor vessel at a steady rate over 6 hours. Continue reaction for further 1 hour after charging potassium persulfate, then the reactor vessel was depressurized and cooled to ambient temperature. 9632 g of aqueous solution with a solid content of 21.0% was obtained (the yield was 97.5%).

### Example 2: preparation of ethylphosphorous acid

To a 16 litre pressure reactor was charged 1640 (20mol) of phosphorous acid and 7.5 kg of water. The temperature of the reactor vessel was raised to 100 °C and ethylene was introduced into the vessel via a pressure reduced valve at 6 bar. With continuous agitation, 12 g of potassium persulfate in 200 g of water was metered into the reactor vessel at constant rate over 6 hours and temperature was kept at 100 -110°C. Continued reaction for an addition of 1 hour before the reactor vessel was depressurized and temperature cooled to ambient. 9742 g of water solution with solid content of 22.3% (yield of 98.3%) was obtained.

### Example 3: Dialkylphosphinic-ethylphosphite aluminum salt

8430 g of diethylphosphinic sodium salt solution obtained in Example 1 (containing 12mol of sodium diethylphosphinate) and 1486 g of aqueous solution obtained in Example 2 (containing 3mol of ethyl phosphorous acid) were mixed in a reaction kettle, after temperature was raised to 90 °C with agitation, 3875 g of 46% Al₂(SO₄)₃.14H₂O (6.01 mol aluminum) was charged into the vessel over 1 hour. The precipitated solid was filtered and washed with hot water, and finally vacuum dried at 130 °C to obtain 1897 g product (Yield 97.9%).

### Example 4: dialkylphosphinic-phosphite aluminum salt

8430 g of diethylphosphinic sodium salt solution obtained in Example 1 (containing 12mol of sodium diethylphosphinate) nd 533 g of 46% phosphorous acid solution (3 mol of phosphorous) were mixed in a reaction kettle. The solution was heated and kept at 90 oC. With continuous agitation, 3873 g of a 46% solution of Al2(SO4)3.14H2O (6.01 mol aluminum) was metered into the vessel at a constant rate over 1 hour. The obtained precipitated product was filtered and washed with hot water, and finally vacuum dried at 130 oC to obtain 1781 g of product (Yield 96.0%).

### Example 5: Dialkylphosphinic-ethylphosphite aluminum salt

To a 16 liter vessel was charged 1274g (12 mol) of sodium hypophosphite monohydrate, 648 g (3 mol) of sodium phosphite, 35 g of sulfuric acid, and 7.5 kg of water. With continuous agitation and he temperature of the solution was raised to 100 °C, ethylene was introduced into the vessel via pressure reduced valve at 6 bar. 16g (0.065mol) of potassium persulfate in 300 g of water was metered into the reactor vessel at a constant rate over 6 hours with temperature kept at 100-110 °C. The reaction was continued for an addition of 1 hour before the reactor vessel was depressurized and temperature was cooled to 90 °C. While agitated, 3857 g of a 46% solution of Al₂(SO₄)₃.14H₂O (6.01 mol of Al) was metered into the vessel at constant rate over 1 hour. The precipitated product was filtered and washed with hot water, and finally vaccum dried at 130 °C. 1882 g of product was obtained (97% yield).

### Example 6-10, Application of Flame Retardant:

The raw materials and sources used in the embodiment of the invention are as follows:
(1) PA66 resin, EPT27 by Pingdinshan Shenma
(2) Diethylphosphinic aluminum salt, LFR-8003 by Liside New Materials Co.
(3) Fiber glass, ECS301UW by Chongqin Composite Materials Co.
(4) MPP, Melapur 200 by BASF
(5) Zinc Borate, Firebrake ZB by US Borax
(6) Antioxidant, Irganox 1098 by BASF

### Specimen Preparation and Test

The flame retardant is thoroughly mixed with PA66 pellets and additives according to Table 1, extruded through a twin screw extruder at temperature at 280 °C, the homogenized extrudate was drawn off, cooled in water bath, pelletized and dried. The dried pellets of molding composition were then processed in a single screw injection molding machine at 285 °C to obtain test specimens.

### Burn Test: according to UL94 vertical burn test.

Melt viscosity: The effect of flame retardant on polymer resin in process can be evaluated by Melt Viscosity Index. The higher the melting index of the materials, the more serious the molecular decomposition of the materials during processing, the more unfavorable the mechanical properties of the materials. The test condition of Melt Viscosity Index is 275 °C /2.16kgₒ .

### Flame retardant rating test

The flame retardant rating test of spline is carried out according to UL94 Burn standard, and the sample thickness is 1.6 mm. According to the test results of UL94, flame retardant materials can be classified according to the following conditions:
V0 Flame stops in less than 10 seconds, no drops in two tests of samples
V1 Flame stops in less than 30 seconds, drops do not ignite cottons in two tests of samples
V2 Flame stops in less than 30 seconds, drops ignite cottons in two tests of samples

Equipment corrosion Test : The corrosion of flame retardant to equipment during processing can be expressed by corrosion index. The higher the corrosion index, the more serious corrosion of the material to equipment. The corrosion index of the equipment consists of a module with a 12x15x3mm extrusion port installed in the die head of the injection molding machine. At a certain temperature, 25 kg of molding compound is injected through this module to detect the weight loss of the die mouth.

The test results are listed in Table 1 below.

**Table 1**

| Component | Example 6 | Example 7 | Example 8 | Example 9 | Example 10 |
|---|---|---|---|---|---|
| PA66 | 49.7 | 49.7 | 49.7 | 49.7 | 49.7 |
| Fiber Glass | 30 | 30 | 30 | 30 | 30 |
| Diethylphosphinic aluminum (FR-8003) | 19 | 12.6 | | | |
| Example3 | | | 19 | | |
| Example 4 | | | | 19 | |
| Example 5 | | | | | 19 |
| MPP (Melpur200) | 0 | 6.4 | 0 | 0 | 0 |
| Zinc Borate (Firebrake ZB) | 1 | 1 | 1 | 1 | 1 |
| Antioxidant (Irg 1098 | 0.3 | 0.3 | 0.3 | 0.3 | 0.3 |
| UL94@1,6mm Burn Test | V1 | V0 | V0 | V0 | V0 |
| Melt Index (g/10min) | 8.8 | 31.2 | 8.6 | 9.1 | 8.8 |
| Corrosion Test (%) | 0.04 | 0.62 | 0.02 | 0.03 | 0.02 |

From the results in Table 1, it can be seen that the flame retardant efficiency of Diethylphosphinic aluminum salt alone is not high. In Example 6, when 20% of flame retardant is also added, it only reaches the flame retardant level of V1. Generally, Diethylphosphinic aluminum flame retardant needs to add MPP (melamine polyphosphoric) as a synergist to improve the flame retardant efficiency of the flame retardant system. However, from the results in Table 1, it can also be seen that the addition of MPP in Example 7 causes significant decomposition of polymer molecules and a significant increase in melt index. At the same time, the corrosion to the equipment is also very significant.

As can be seen from the results in Table 1, the implementation cases 7-9 of the present invention can all improve the flame retardant efficiency, greatly reduce the decomposition of polymer during processing, and obviously improve the corrosion of materials to equipment during processing.

## Claims

1. A dialkylphosphinic-alkylphosphite metal double salt of formula (1) 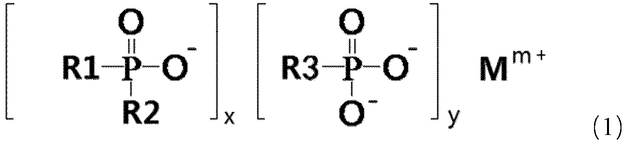 Wherein R1, R2, R3 identical or different, are H, linear or branched C1-C8 alkyl, linear or branched C2-C8 unsaturated alkylene, or C6-C8 aryl, or alkyl containing carboxy, hydroxyl, amino, amide, ester, or epoxy group.
WhereinMisCa, Mg, Sb, Sn, Ge, Ti, Zn, Fe, Zr, Ce, Al , Sr, Mnmetal ion and/or protonated amine,
wherein
m is the number of cationic charges of the respective metal ion
x is any number from 0 to (m-0.01)
y is any number from 0.005 to (m/2)
Wherein the sum of number of anions equals to the sum of number of cations.

2. The dialkylphosphinic-alkylphosphite metal double salt as claimed in claim 1, wherein R1, R2, R3 are H, methyl, ethyl, propyl, and butyl.

3. The dialkylphosphinic-alkylphosphite metal double salt as claimed in claims 1 - 2, wherein M is Ca, Mg, Sn, Zn, Fe, Ti, Al.

4. The dialkylphosphinic-alkylphosphite metal double salt as claimed in claims 1 - 3, wherein
x is any number from 1 to (m-0.01)
y is any number from 0.005 to (m-1)/2

5. The dialkylphosphinic-phosphite metal double salt as claimed in claims 1 - 4, wherein
x is any number from 1.6 to (m-0.01)
Y is any number from 0.005 to (m/2-0.8)

6. The dialkylphosphinic-phosphite metal double salt as claimed in claims 1-5, is a powder having particle size from 0.1 to 1000µm, water solubility from 0.01 to 10g/l, packing density from 80 to 800 g/l, and residue moisture content from 0.1 to 5%.

7. A process for preparation of dialkylphosphinic-alkylphosphite metal double salt as claimed in claims 1 - 6, by reacting an aqueous solution containing mixtures of dialkylphosphinic acid or its alkali metal salt and alkylphosphorous acid or its alkali metal salt with metal compound to obtain the dialkylphosphinic-alkylphosphite metal double salt, wherein the metal compounds are soluble metal hydroxides, soluble metal salt of carboxylic or inorganic acids.

8. The use of dialkylphosphinic-alkylphosphite metal double salt as claimed in claims 1-6, as flame retardant or flame retardant synergist in flame retardant composition for flame retardant coatings, foams, woods, cellulose fibers, as reactive or non-reactive flame retardant for flame retardant polymeric molding compounds, plastic moldings, polymeric spun fibers, as flame retardant for coated flame retardant fabrics.

9. Flame retardant thermoplastic or thermoset molding compounds, polymeric moldings, polymeric films, polymeric fibers and polymeric fabrics comprising 0.1 to 45 % by weight of flame retardant composition containing dialkylphosphinic-alkylphosphite metal double salt as claimed in claims 1 - 6, 55-99.9% by weight of thermoplastic or thermoset polymeric resin or their mixtures, 0-30% by weight of additives and 0-55% by weight of fillers or reinforced additives, wherein the sum of all components equals to 100%

10. Flame retardant composition as claimed in claim 9, comprising 50 to 100 % of claim 1 to 6 by weight of dialkylphosphinic-alkylphosphite metal double salt as flame retardant and 0.1 to 50 % by weight of flame retardant synergist, wherein the flame retardant synergists includes condensation products of melamine and/or reaction products of melamine with phosphoric acid and/or reaction products of condensation product of melamine with polyphosphoric acid or its mixture and/or condensation products of melamine and cyanurate, The nitrogenous phosphate of (NH4) YH3-YPO4 or (NH4PO3) Z, where y equals 1 to 3 and z equals 1 to 10,000; Benzoguanidine, tris (hydroxyethyl) isocyanurate, allantoin, glycaourea, melamine, cyanurate, dicyandiamide and/or guanidine; Magnesium oxide, calcium oxide, alumina, zinc oxide, manganese oxide, stannic oxide, alumina hydroxide, Boehmite, dihydrotalcite, calcium hydroxide, zinc hydroxide, tin oxide hydrate, manganese hydroxide, zinc borate, zinc basic silicate and/or zinc stannate, zinc metalilicate.

11. Flame retardant composition as claimed in claim 9, comprising 50 to 99 % by weight of flame retardant and 0.1 to 50 % by weight of dialkylphosphinic-alkylphosphite metal double salt and/or mixtures thereof as described in any of claims 1-6, Wherein the flame retardant is phosphate ester, Aluminum hypophosphite, zinc hypophosphite, calcium hypophosphite, sodium hypophosphite, monophenyl phosphinic acid and its salts, dialkyl phosphinic acid and its salts and monoalkyl phosphinic acid and its salts, 2-carboxyethyl alkyl phosphinic acid and its salts, 2- carboxyethyl methyl phosphinic acid and its salts, 2- carboxyethyl aryl phosphinic acid and its salts, 2- carboxyethyl phenyl phosphinic acid and its salts, and oxa -10- phosphaphenanthrene (DOPO) Melamine, Melamine, Melamine, Dimelamine pyrophosphate, Melamine polyphosphate, Melamine polyphosphate, Melamine polyphosphate and/or Melamine polyphosphate and/or their mixed polyphosphates and/or ammonium hydrogen phosphate, ammonium dihydrogen phosphate and/or ammonium polyphosphate.
